# EUROPÄISCHE PATENTSCHRIFT

(11) **EP 4 347 276 B1**
(45) Veröffentlichungstag und Bekanntmachung des Hinweises auf die Patenterteilung: **23.04.2025**
(21) Anmeldenummer: 21820111.9
(22) Anmeldetag: 29.11.2021
(51) Int. Cl.: B60C 11/03, B60C 11/13

(54) **FAHRZEUGLUFTREIFEN**
PNEUMATIC TIRE FOR A VEHICLE
PNEU POUR VÉHICULE

(30) Priorität: 03.06.2021 DE 102021205662
(43) Veröffentlichungstag der Anmeldung: 10.04.2024
(73) Patentinhaber: Continental Reifen Deutschland GmbH, 30175 Hannover (DE)
(72) Erfinder: BAUER, Claudia, 30165 Hannover (DE); PANG-JIAN-XIANG, Edwin, 30165 Hannover (DE)
(74) Vertreter: Continental Corporation
(86) Internationale Anmeldenummer: PCT/DE2021/200220
(87) Internationale Veröffentlichungsnummer: WO 2022/253372

(56) Entgegenhaltungen:
- EP-A1- 3 785 938
- DE-A1- 102007 016 930
- DE-A1- 102017 203 225
- DE-A1- 102017 211 130
- JP-A- 2010 058 569

## Beschreibung

Die Erfindung betrifft einen Fahrzeugluftreifen mit einem laufrichtungsgebundenen Laufstreifen mit über die Laufstreifenbreite V-förmig zueinander verlaufenden, ineinander einmündenden Schrägrillen, wobei in jeder Laufstreifenhälfte zwischen in Umfangsrichtung benachbarten Schrägrillen zumindest zwei zu den Schrägrillen in Draufsicht gegensinnig geneigte Nuten mit jeweils zwei Nutflanken und einem Nutgrund verlaufen, wobei die Schrägrillen und die Nuten zu zwei schulterseitigen Profilblockreihen gehörende schulterseitige Profilblöcke und in einem zentralen Laufstreifenbereich befindliche mittlere Profilblöcke begrenzen, wobei zu den Schrägrillen gegensinnig geneigte Nuten vorgesehen sind, welche an ihren Nutflanken jeweils eine Anzahl von Vorsprüngen aufweisen, wobei - über die Erstreckung der zugehörigen Nut betrachtet - ein an der einen Nutflanke befindlicher Vorsprung abwechselnd auf einen an der anderen Nutflanke befindlichen Vorsprung folgt und wobei am Nutgrund ein die Vorsprünge entlang verlaufender Nutgrundpfad verbleibt.

Ein derartiger Fahrzeugluftreifen ist beispielsweise aus der DE 10 2017 211 130 A1 bekannt. Der Reifen weist einen laufrichtungsgebundenen Laufstreifen mit über die Laufstreifenbreite V-förmig zueinander verlaufenden, ineinander einmündenden Schrägrillen und zwischen diesen verlaufende Nuten auf. Es sind dabei Nuten vorgesehen, an deren Nutflanken zumindest jeweils ein keilförmiger Vorsprung ausgebildet ist, wobei die Vorsprünge, in Erstreckungsrichtung der Nut betrachtet, einander überlappen. Zwischen den von gegenüberliegenden Nutflanken ausgehenden Vorsprüngen und zwischen jedem Vorsprung und der gegenüberliegenden Nutflanke verläuft ein Nutgrundpfad mit einer Breite von 0,5 mm bis 1,5 mm. Die Profilblöcke stützen sich unter Belastung an den Vorsprüngen ab, wodurch sie stabilisiert und derart die Traktions- und Bremseigenschaften auf Schnee verbessert sind. Die Vorsprünge bewirken beim Fahren auf schneebedeckter Fahrbahn ein Ansammeln von Schnee in den Nuten, sodass durch den Effekt der Schnee-Schnee-Reibung gute Schneegriffeigenschaften gewährleistet sind. Der Reifen ist somit hinsichtlich seiner Fahreigenschaften unter winterlichen Fahrbedingungen gut ausbalanciert.

Der Erfindung liegt die Aufgabe zugrunde, bei einem Fahrzeugluftreifen der eingangs genannten Art die Gefahr des Auftretens von Aquaplaning zu reduzieren, wobei die vorteilhaften Traktions-, Brems- und Griffeigenschaften auf Schnee erhalten bleiben sollen.

Gelöst wird die gestellte Aufgabe erfindungsgemäß dadurch, dass die Vorsprünge jeweils die Form einer Pyramide mit genau zwei dreieckigen Begrenzungsflächen und einer an der Nutflanke liegenden, radial äußeren Spitze aufweisen, wobei an jeder Nutflanke zumindest drei aneinander angrenzende Vorsprünge ausgebildet sind, welche dem Nutgrundpfad einen in Draufsicht zick-zack-förmigen Verlauf verleihen.

Durch die spezielle Gestalt der Vorsprünge in Form von Pyramiden ist der "Queranteil" des zwischen diesen verlaufenden Nutgrundpfades gegenüber den bekannten keilförmigen Vorsprüngen deutlich reduziert, wodurch beim Fahren auf nasser Fahrbahn der Wasserfluss durch die Nut noch verwirbelungsarm bzw. nahezu verwirbelungsfrei verläuft und die Gefahr des Auftretens von Aquaplaning deutlich reduziert wird. Die pyramidenförmigen Vorsprünge stützen die Profilblöcke weiterhin unter Belastung optimal ab, sodass besonders vorteilhafte Traktions-, Brems- und Griffeigenschaften auf Schnee erhalten bleiben.

Gemäß einer ersten bevorzugten Ausführung weist jeder Vorsprung eine in Draufsicht senkrecht zur Nutmittellinie der Nut verlaufende, in radialer Richtung ausgerichtete Symmetrieebene auf, in welcher die zwei dreieckigen Begrenzungsflächen eine zur radialen Richtung geneigte gemeinsame Begrenzungskante aufweisen, welche, in Draufsicht betrachtet, entweder auf oder vor der Nutmittellinie endet. Die dreieckigen Begrenzungsflächen eines Vorsprunges ragen bei dieser Ausführung daher nicht über die Nutmittellinie hinaus, wodurch die Wasserdrainage entlang des Nutgrundpfades und durch die Nut hindurch zur nächstliegenden Schrägrille weiter verbessert ist.

Für die Wasserableitung ist es zusätzlich von Vorteil, wenn gemäß einer ersten bevorzugten Ausführung die gemeinsame Begrenzungskante der zwei dreieckigen Begrenzungsflächen, in Draufsicht betrachtet, vor der Nutmittellinie in einem senkrecht zu dieser ermittelten Abstand von mindestens 0,1 mm endet.

Dabei ist es günstig, wenn bei der ersten bevorzugten Ausführung die gemeinsame Begrenzungskante der zwei dreieckigen Begrenzungsflächen zur radialen Richtung unter einem Winkel von 15° bis 35°, insbesondere von 20° bis 30°, verläuft. Diese Ausgestaltung ist insbesondere für die erwähnte abstützende Wirkung der Vorsprünge vorteilhaft.

Eine weitere bevorzugte Ausführung ist dadurch gekennzeichnet, dass die dreieckigen Begrenzungsflächen jeweils eine, in einer in radialer Richtung ermittelten konstanten Tiefe verlaufende, radial innere Begrenzungskante aufweisen, welche relativ zur Nutmittellinie der Nut unter einem Winkel von 25° bis 50°, insbesondere von 30° bis 45°, verläuft. Auch diese Ausgestaltung ist für die gegenseitige Abstützung der Vorsprünge und für eine gute Wasserdrainage durch den Nutgrundpfad hindurch besonders vorteilhaft.

Dabei ist es zusätzlich von Vorteil, wenn der Nutgrundpfad eine senkrecht zwischen den radial inneren Begrenzungskanten ermittelte Breite von 30% bis 50%, insbesondere von 35% bis 45%, der an der Laufstreifenperipherie ermittelten Breite der Nut aufweist.

Gemäß einer weiteren bevorzugten Ausführung weisen die dreieckigen Begrenzungsflächen jeweils eine an der Nutflanke verlaufende Begrenzungskante auf, welche zur radialen Richtung unter einem Winkel von 15° bis 35°, insbesondere von 20° bis 30°, geneigt ist. Solche Begrenzungsflächen verbessern ebenfalls die abstützende Wirkung der Vorsprünge.

Gemäß einer weiteren bevorzugten Ausführung befindet sich die radial äußere Spitze jedes Vorsprunges in einer gegenüber dem tiefsten Punkt der Nut in radialer Richtung ermittelten Höhe von 20% bis 60%, insbesondere von 30% bis 50%, bevorzugt von 35% bis 45%, der in radialer Richtung ermittelten maximalen Tiefe der Nut. Dies trägt vor allem zur zu Verbesserung der Wasserdrainage in den Nuten bei.

Eine weitere bevorzugte Ausführung ist dadurch gekennzeichnet, dass die Nuten, welche an ihren Nutflanken die aneinander angrenzenden Vorsprünge aufweisen, an jeder Nutflanke zumindest vier aneinander angrenzende Vorsprünge aufweisen. Durch zumindest vier Vorsprünge gelingt ist - im Vergleich zu Nuten mit weniger Vorsprüngen - mit einem verhältnismäßig geringem Gummivolumen (Volumen sämtlicher Vorsprünge in einer Nut) eine äußerst vorteilhafte abstützende Wirkung zu erzielen.

In diesem Zusammenhang ist es ferner günstig, wenn die Nuten, welche an ihren Nutflanken die aneinander angrenzenden Vorsprünge aufweisen, an der einen Nutflanke zumindest vier, insbesondere genau vier, Vorsprünge und an der anderen Nutflanke zumindest fünf, insbesondere genau fünf, Vorsprünge aufweisen.

Gemäß einer weiteren bevorzugten Ausführung verlaufen in jeder Laufstreifenhälfte zwischen in Umfangsrichtung benachbarten Schrägrillen drei zu den Schrägrillen geneigte Nuten, wobei zumindest, insbesondere ausschließlich, in den beiden jeweils weiter laufstreifenaußenseitig verlaufenden Nuten die Vorsprünge ausgebildet sind. Die abstützende Wirkung der Vorsprünge ist insbesondere bei Kurvenfahrt hinsichtlich der Traktions-, Brems- und Griffeigenschaften auf Schnee besonders vorteilhaft. Die am weitesten laufstreifeninnenseitig verlaufenden Nuten sind hingegen frei von Vorsprüngen, was vor allem für die Wasserableitung günstig ist.

Im Hinblick auf eine gute Balance zwischen der Steifigkeit und dem Entwässerungsverhalten des Laufstreifens ist es von Vorteil, wenn die Nuten in radialer Richtung eine Tiefe von 75% bis 100%, insbesondere von 80% bis 90%, der Profiltiefe und eine Breite von 2,0 mm bis 6,0 mm, insbesondere von 3,0 mm bis 5,0 mm, aufweisen.

Für ein geringes Abrollgeräusch ist es ferner günstig, wenn die Nuten, in Draufsicht betrachtet und bezogen auf ihre Nutmittellinien, zur Umfangsrichtung unter einem Winkel von 15° bis 55°, insbesondere von 25° bis 45°, verlaufen.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
- Fig. 1: eine Draufsicht auf eine Teilabwicklung eines Laufstreifens eines Fahrzeugluftreifens mit einer Ausführungsvariante der Erfindung,
- Fig. 2: einen Schnitt entlang der Linie II-II der Fig. 1,
- Fig. 3: eine vergrößerte Draufsicht auf das Detail Z₃ der Fig. 1,
- Fig. 4: einen Schnitt entlang der Linie IV-IV der Fig. 3,
- Fig. 5: einen Schnitt entlang der Linie V-V der Fig. 3 und
- Fig. 6: eine weiter vergrößerte Draufsicht auf das Detail Z₆ der Fig. 3.

Gemäß der Erfindung ausgeführte Fahrzeugluftreifen sind Reifen für mehrspurige Kraftfahrzeuge sowie vorzugsweise Reifen in Radialbauart für Personenkraftwagen, Vans oder Light-Trucks (Leichte LKWs mit zGM ≤ 7,5 t).

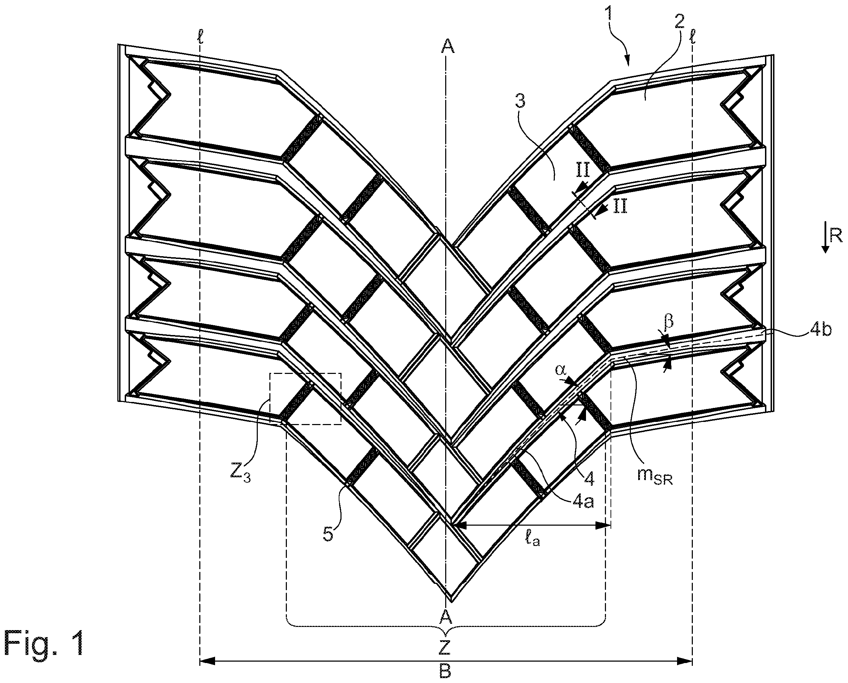

Fig. 1 zeigt eine Draufsicht auf ein Teilabwicklung eines zu einem Fahrzeugluftreifen gehörenden Laufstreifens mit einer laufrichtungsgebunden ausgeführten Profilierung. Der Fahrzeugluftreifen ist derart am Fahrzeug zu montieren, dass er die durch den Pfeil R angedeutete Abrollrichtung bei Vorwärtsfahrt aufweist. Die seitlichen Ränder der Bodenaufstandsfläche (entspricht dem statisch ermittelten Footprint bei einer Last von 70 % der maximalen Tragfähigkeit bei einem Innendruck von 85 %, ermittelt gemäß E.T.R.T.O.-Standards) sind durch Linien 1 angedeutet, wobei die Bodenaufstandsfläche in axialer Richtung eine Breite B aufweist. Ferner ist die Reifenäquatorialebene durch eine Linie A-A gekennzeichnet.

Der Laufstreifen weist zwei schulterseitige Profilblockreihen 1 mit schulterseitigen Profilblöcken 2 und einen zentralen Laufstreifenbereich Z mit mittleren Profilblöcken 3 auf, wobei die schulterseitigen Profilblöcke 2 und die mittleren Profilblöcke 3 durch Schrägrillen 4 und Nuten 5 voneinander getrennt sind. Die schulterseitigen Profilblöcke 2 und die mittleren Profilblöcken 3 sind bevorzugter Weise mit Einschnitten und/oder Mikrorillen versehen, welche in Fig. 1 nicht gezeigt sind und in bekannter Weise ausgeführt sein können.

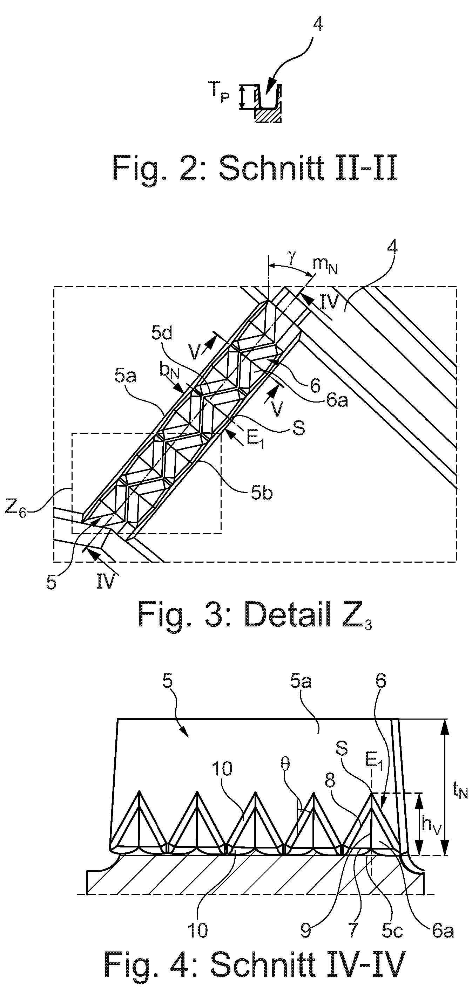

Die Schrägrillen 4 verlaufen V-förmig über die Laufstreifenbreite, münden im Bereich der Reifenäquatorialebene (Linie A-A) ineinander ein, verlaufen ferner über die seitlichen Ränder (Linien 1) der Bodenaufstandsfläche hinaus, bilden die Hauptrillen des Laufstreifens und sind in radialer Richtung auf die jeweils vorgesehene Profiltiefe T_{P} (Fig. 2) von üblicherweise 6,5 mm bis 13,0 mm ausgeführt, wobei die jeweils über den selben seitlichen Rand (Linie 1) der Bodenaufstandsfläche hinausverlaufenden Schrägrillen 4, in Draufsicht betrachtet, parallel zueinander verlaufen. Die über den einen seitlichen Rand (Linie 1) der Bodenaufstandsfläche hinausverlaufenden Schrägrillen 4 sind auf kaum merkbare Weise zu den über den anderen seitlichen Rand (Linie 1) der Bodenaufstandsfläche hinausverlaufenden Schrägrillen 4 in Umfangsrichtung versetzt. Die Abrollrichtung des Reifens bei Vorwärtsfahrt (Pfeil R) ist derart, dass die Schrägrillen 4 bei Vorwärtsfahrt zuerst mit ihren laufstreifeninnenseitigen Enden in den Untergrund eintreten.

Jede Schrägrille 4 setzt sich, in Draufsicht betrachtet, aus einem leicht gebogen verlaufenden, laufstreifeninnenseitigen Rillenabschnitt 4a und einem zur Umfangsrichtung stärker geneigten, schulterseitigen Rillenabschnitt 4b zusammen und weist eine Rillenmittellinie m_{SR} auf. Der laufstreifeninnenseitige Rillenabschnitt 4a weist - bezogen auf die Rillenmittellinie m_{SR} - eine in die axiale Richtung projizierte Länge lₐ von 25% bis 35% der Breite B der Bodenaufstandsfläche auf und verläuft - ebenfalls bezogen auf die Rillenmittellinie m_{SR} - zur axialen Richtung unter einem Winkel α von 30° bis 55°, wobei der Winkel α bezüglich einer lokal an die Rillenmittellinie m_{SR} angelegten Tangente ermittelt ist. Der schulterseitige Rillenabschnitt 4b verläuft - bezogen auf die Rillenmittellinie m_{SR} - zur axialen Richtung unter einem Winkel β von 0° bis 15°, insbesondere von bis zu 10°.

In jeder Laufstreifenhälfte sind zwischen in Umfangsrichtung benachbarten Schrägrillen 4 drei der bereits erwähnten Nuten 5 ausgebildet, welche - bezogen auf ihre dem Nutverlauf folgende Nutmittellinien m_{N} (Fig. 3) - in Draufsicht gerade, parallel zueinander sowie zur Umfangsrichtung unter einem Winkel γ (Fig. 3) von 15° bis 55°, insbesondere von 25° bis 45°, verlaufen und bezüglich der Umfangsrichtung gegensinnig zu den Schrägrillen 4 geneigt sind. Ferner verlaufen die in der einen, in Fig. 1 rechten Laufstreifenhälfte am weitesten laufstreifeninnenseitig ausgebildeten Nuten 5 in Draufsicht in Verlängerung der Rillenabschnitte 4a der in der anderen Laufstreifenhälfte ausgebildeten Schrägrillen 4.

Die schulterseitigen Profilblöcke 2 sind somit durch die schulterseitigen Rillenabschnitte 4b, die am weitesten laufstreifenaußenseitig verlaufenden Nuten 5 sowie durch an die schulterseitigen Rillenabschnitte 4b anschließende Endabschnitte der laufstreifeninnenseitigen Rillenabschnitte 4a begrenzt. Die mittleren Profilblöcke 3 sind durch die laufstreifeninnenseitigen Rillenabschnitte 4a und die Nuten 5 begrenzt und weisen in Draufsicht eine im Wesentlichen parallelogrammförmige Gestalt auf, wobei sie in Umfangsrichtung auf "Spitzen" der Parallelogramme stehend angeordnet sind.

Die weitere Ausgestaltung der Nuten 5 wird nachfolgend insbesondere anhand einer einzelnen Nut 5 erläutert.

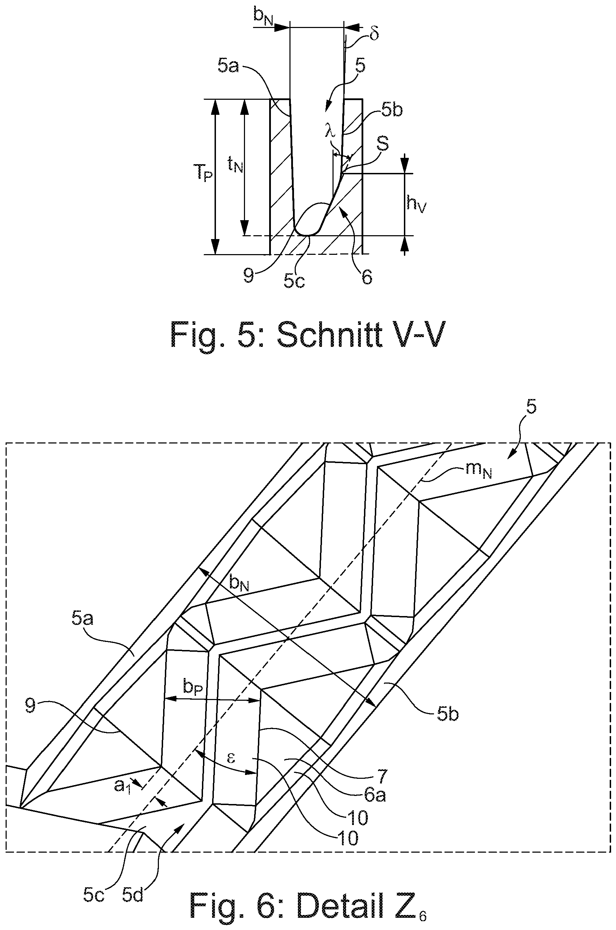

Gemäß Fig. 5 weist die Nut 5 in radialer Richtung eine maximale Tiefe t_{N} von 75% bis 100%, insbesondere von 80% bis 90%, der Profiltiefe T_{P} und an der Laufstreifenperipherie eine senkrecht zur Nutmittellinie m_{N} ermittelte Breite b_{N} (vergl. Fig. 3) von 2,0 mm bis 6,0 mm, insbesondere von 3,0 mm bis 5,0 mm, auf. Wie Fig. 3 in Kombination mit Fig. 5 zeigt, ist die Nut 5 durch eine laufstreifenaußenseitige Nutflanke 5a, eine laufstreifeninnenseitige Nutflanke 5b und einen Nutgrund 5c (Fig. 5) begrenzt, wobei die Nutflanken 5a, 5b, im senkrecht zu Nutmittellinie m_{N} ausgerichteten Querschnitt betrachtet, zur radialen Richtung unter einem Winkel δ (Fig. 5) von 0° bis 10°, insbesondere von bis zu 4°, verlaufen.

Wie Fig. 3 und Fig. 4 in Kombination mit Fig. 1 zeigen, sind in jeder Laufstreifenhälfte in den beiden weiter laufstreifenaußenseitig verlaufenden Nuten 5 (Fig. 1) am Nutgrund 5c (Fig. 4) aufsitzende, pyramidenförmige Vorsprünge 6 (Fig. 3, Fig. 4) ausgebildet, zu welchen an der laufstreifenaußenseitigen Nutflanke 5a angebundene, aneinander angrenzende, Vorsprünge 6 (Fig. 3, Fig. 4) und an der laufstreifeninnenseitigen Nutflanke 5b angebundene, aneinander angrenzende, pyramidenförmige Vorsprünge 6 (Fig. 3) gehören. Gemäß Fig. 3 folgt - über die Erstreckung einer die Vorsprünge 6 aufweisenden Nut 5 betrachtet - jeweils ein an der laufstreifenaußenseitigen Nutflanke 5a befindlicher Vorsprung 6 abwechselnd auf einen an der laufstreifeninnenseitigen Nutflanke 5b befindlichen Vorsprung 6, wobei am Nutgrund 5c (Fig. 4, Fig. 5) zwischen den an den einander gegenüberliegenden Nutflanken 5a, 5b ausgebildeten Vorsprüngen 6 ein in Draufsicht zick-zack-förmig verlaufender Nutgrundpfad 5d verbleibt. Die an den Nutenden liegenden Vorsprünge 6 grenzen ferner unmittelbar an eine Schrägrille 4 an.

Wie Fig. 3 und Fig. 4 zeigen, weist jeder Vorsprung 6 eine senkrecht zur Nutmittellinie m_{N} verlaufende, in radialer Richtung ausgerichtete Symmetrieebene E₁, eine in dieser befindliche, an der jeweiligen Nutflanke 5a, 5b liegende, radial äußere Spitze S und zwei dreieckige Begrenzungsflächen 6a auf. Gemäß Fig. 4 und Fig. 5 befindet sich die radial äußere Spitze S in einer in der Symmetrieebene E₁ gegenüber dem tiefsten Punkt der Nut 5 in radialer Richtung ermittelten Höhe h_{V} von 20% bis 60%, insbesondere von 30% bis 50%, bevorzugt von 35% bis 45%, der maximale Tiefe t_{N} der Nut 5. Gemäß Fig. 4 weisen die Begrenzungsflächen 6a jeweils eine radial innere Begrenzungskante 7, jeweils eine der entsprechenden Nutflanke 5a, 5b zugewandte Begrenzungskante 8 und eine in der Symmetrieebene E₁ verlaufende gemeinsame Begrenzungskante 9 auf. Die radial innere Begrenzungskante 7 verläuft in einer in radialer Richtung ermittelten konstanten Tiefe sowie, in Draufsicht betrachtet, relativ zur Nutmittellinie m_{N} unter einem einen Winkel ε (Fig. 6) von 25° bis 50°, insbesondere von 30° bis 45°. Die an der jeweiligen Nutflanke 5a, 5b verlaufende Begrenzungskante 8 ist zur radialen Richtung unter einem Winkel θ (Fig. 4) von 15° bis 35°, insbesondere von 20° bis 30°, geneigt. Die gemeinsame Begrenzungskante 9 verläuft zur radialen Richtung unter einem Winkel λ (Fig. 5) von 15° bis 35°, insbesondere von 20° bis 30°, wobei die gemeinsame Begrenzungskante 9 - in Draufsicht betrachtet und bezogen auf ihr radial inneres Ende - vor der Nutmittellinie m_{N} in einem senkrecht zu dieser ermittelten Abstand a₁ (Fig. 6) von vorzugsweise mindestens 0,1 mm endet, alternativ auf der Nutmittellinie m_{N} endet.

Der Nutgrundpfad 5d weist ferner eine senkrecht zwischen einander gegenüberliegenden und daher in Draufsicht parallel zueinander ausgerichteten, radial inneren Begrenzungskanten 7 ermittelte Breite b_{P} (Fig. 6) auf, auf welche nachfolgend eingegangen wird.

Der erwähnte Winkel λ der gemeinsame Begrenzungskante 9 (Fig. 5), die genannte Höhe h_{V} des Vorsprunges 6 (Fig. 5) und die erwähnte Breite b_{N} der Nut 5 (Fig. 6) sind vorzugsweise derart aufeinander abgestimmt, dass die Breite b_{P} (Fig. 6) des Nutgrundpfades 5d 30% bis 50%, insbesondere 35% bis 45%, der erwähnten Breite b_{N} (Fig. 6) der Nut 5 beträgt.

Gemäß Fig. 4 und Fig. 6 ist beim gezeigten Ausführungsbeispiel zwischen jeder Begrenzungsfläche 6a und dem Nutgrund 5c sowie zwischen jeder Begrenzungsfläche 6a und der jeweiligen Nutflanke 5a, 5b eine Übergangsrundung 10 ausgebildet.

Die Erfindung ist auf das beschriebene Ausführungsbeispiel nicht beschränkt. Insbesondere verlaufen in jeder Laufstreifenhälfte zumindest zwei Nuten 5, wobei an jeder Nutflanke 5a, 5b der Nuten 5 zumindest drei Vorsprünge 6 ausgebildet ist. Die Vorsprünge 6 können in sämtlichen Nuten 5 oder nur in einigen Nuten 5 ausgebildet sein. Die Übergangsrundungen 10 sind optional. Die Schrägrillen 4 können in Draufsicht beispielsweise auch durchgehend gebogen verlaufen.

### Bezugsziffernliste

- 1: schulterseitige Profilblockreihe
- 2: schulterseitiger Profilblock
- 3: mittlerer Profilblock
- 4: Schrägrille
- 4a: laufstreifeninnenseitiger Rillenabschnitt
- 4b: laufstreifenaußenseitiger Rillenabschnitt
- 5: Nut
- 5a: laufstreifenaußenseitige Nutflanke
- 5b: laufstreifeninnenseitige Nutflanke
- 5c: Nutgrund
- 5d: Nutgrundpfad
- 6: Vorsprung
- 6a: Begrenzungsfläche
- 7: radial innere Begrenzungskante
- 8: Begrenzungskante
- 9: gemeinsame Begrenzungskante
- 10: Übergangsrundung
- A-A: Linie (Reifenäquatorialebene)
- a₁: Abstand
- B: Breite
- b_{N}, b_{P}: Breite
- E₁: Symmetrieebene
- h_{V}: Höhe
- 1: Linie (seitlicher Rand der Bodenaufstandsfläche)
- lₐ: Länge
- m_{N}: Nutmittellinie
- m_{SR}: Rillenmittellinie
- R: Pfeil (Abrollrichtung)
- S: radial äußere Spitze
- t_{N}: maximale Tiefe
- T_{P}: Profiltiefe
- Z: zentraler Laufstreifenbereich
- Z₃, Z₆: Detail
- α, β, γ, δ, ε, θ, λ: Winkel

## Patentansprüche

1. Fahrzeugluftreifen mit einem laufrichtungsgebundenen Laufstreifen mit über die Laufstreifenbreite V-förmig zueinander verlaufenden, ineinander einmündenden Schrägrillen (4), wobei in jeder Laufstreifenhälfte zwischen in Umfangsrichtung benachbarten Schrägrillen (4) zumindest zwei zu den Schrägrillen (4) in Draufsicht gegensinnig geneigte Nuten (5) mit jeweils zwei Nutflanken (5a, 5b) und einem Nutgrund (5c) verlaufen, wobei die Schrägrillen (4) und die Nuten (5) zu zwei schulterseitigen Profilblockreihen (1) gehörende schulterseitige Profilblöcke (2) und in einem zentralen Laufstreifenbereich (Z) befindliche mittlere Profilblöcke (3) begrenzen, wobei zu den Schrägrillen (4) gegensinnig geneigte Nuten (5) vorgesehen sind, welche an ihren Nutflanken (5a, 5b) jeweils eine Anzahl von Vorsprüngen (6) aufweisen, wobei - über die Erstreckung der zugehörigen Nut (5) betrachtet - ein an der einen Nutflanke (5a) befindlicher Vorsprung (6) abwechselnd auf einen an der anderen Nutflanke (5b) befindlichen Vorsprung (6) folgt und wobei am Nutgrund (5c) ein die Vorsprünge (6) entlangverlaufender Nutgrundpfad (5d) verbleibt,
**dadurch gekennzeichnet,**
**dass** die Vorsprünge (6) jeweils die Form einer Pyramide mit genau zwei dreieckigen Begrenzungsflächen (6a) und einer an der Nutflanke (5a, 5b) liegenden, radial äußeren Spitze (S) aufweisen, wobei an jeder Nutflanke (5a, 5b) zumindest drei aneinander angrenzende Vorsprünge (6) ausgebildet sind, welche dem Nutgrundpfad (5d) einen in Draufsicht zick-zack-förmigen Verlauf verleihen.

2. Fahrzeugluftreifen nach Anspruch 1, **dadurch gekennzeichnet, dass** jeder Vorsprung (6) eine in Draufsicht senkrecht zur Nutmittellinie (m_{N}) der Nut (5) verlaufende, in radialer Richtung ausgerichtete Symmetrieebene (E₁) aufweist, in welcher die zwei dreieckigen Begrenzungsflächen (6a) eine zur radialen Richtung geneigte gemeinsame Begrenzungskante (9) aufweisen, welche, in Draufsicht betrachtet, entweder auf oder vor der Nutmittellinie (m_{N}) endet.

3. Fahrzeugluftreifen nach Anspruch 2, **dadurch gekennzeichnet, dass** die gemeinsame Begrenzungskante (9) der zwei dreieckigen Begrenzungsflächen (6a), in Draufsicht betrachtet, vor der Nutmittellinie (m_{N}) in einem senkrecht zu dieser ermittelten Abstand (a₁) von mindestens 0,1 mm endet.

4. Fahrzeugluftreifen nach Anspruch 2 oder 3, **dadurch gekennzeichnet, dass** die gemeinsame Begrenzungskante (9) der zwei dreieckigen Begrenzungsflächen (6a) zur radialen Richtung unter einer einem Winkel (λ) von 15° bis 35°, insbesondere von 20° bis 30°, verläuft.

5. Fahrzeugluftreifen nach einem der Ansprüche 1 bis 4, **dadurch gekennzeichnet, dass** die dreieckigen Begrenzungsflächen (6a) jeweils eine, in einer in radialer Richtung ermittelten konstanten Tiefe verlaufende, radial innere Begrenzungskante (7) aufweisen, welche relativ zur Nutmittellinie (m_{N}) der Nut (5) unter einem Winkel (ε) von 25° bis 50°, insbesondere von 30° bis 45°, verläuft.

6. Fahrzeugluftreifen nach Anspruch 5, **dadurch gekennzeichnet, dass** der Nutgrundpfad (5d) eine senkrecht zwischen den radial inneren Begrenzungskanten (7) ermittelte Breite (b_{P}) von 30% bis 50%, insbesondere von 35% bis 45%, der an der Laufstreifenperipherie ermittelten Breite (b_{N}) der Nut (5) aufweist.

7. Fahrzeugluftreifen nach einem der Ansprüche 1 bis 6, **dadurch gekennzeichnet, dass** die dreieckigen Begrenzungsflächen (6a) jeweils eine an der Nutflanke (5a, 5b) verlaufende Begrenzungskante (8) aufweisen, welche zur radialen Richtung unter einem Winkel (θ)von 15° bis 35°, insbesondere von 20° bis 30°, geneigt ist.

8. Fahrzeugluftreifen nach einem der Ansprüche 1 bis 7, **dadurch gekennzeichnet, dass** sich die radial äußere Spitze (S) jedes Vorsprunges (6) in einer gegenüber dem tiefsten Punkt der Nut (5) in radialer Richtung ermittelten Höhe (h_{V}) von 20% bis 60%, insbesondere von 30% bis 50%, bevorzugt von 35% bis 45%, der in radialer Richtung ermittelten maximalen Tiefe (t_{N}) der Nut (5) befindet.

9. Fahrzeugluftreifen nach einem der Ansprüche 1 bis 8, **dadurch gekennzeichnet, dass** die Nuten (5), welche an ihren Nutflanken (5a, 5b) die aneinander angrenzenden Vorsprünge (6) aufweisen, an jeder Nutflanke (5a, 5b) zumindest vier aneinander angrenzende Vorsprünge (6) aufweisen.

10. Fahrzeugluftreifen nach einem der Ansprüche 1 bis 9, **dadurch gekennzeichnet, dass** die Nuten (5), welche an ihren Nutflanken (5a, 5b) die aneinander angrenzenden Vorsprünge (6) aufweisen, an der einen Nutflanke (5a) zumindest vier, insbesondere genau vier, Vorsprünge (6) und an der anderen Nutflanke (5b) zumindest fünf, insbesondere genau fünf, Vorsprünge (6) aufweisen.

11. Fahrzeugluftreifen nach einem der Ansprüche 1 bis 10, **dadurch gekennzeichnet, dass** in jeder Laufstreifenhälfte zwischen in Umfangsrichtung benachbarten Schrägrillen (4) drei zu den Schrägrillen (4) geneigte Nuten (5) verlaufen, wobei zumindest, insbesondere ausschließlich, in den beiden jeweils weiter laufstreifenaußenseitig verlaufenden Nuten (5) die Vorsprünge (6) ausgebildet sind.

12. Fahrzeugluftreifen nach einem der Ansprüche 1 bis 11, **dadurch gekennzeichnet, dass** die Nuten (5) in radialer Richtung eine Tiefe (t_{N}) von 75% bis 100%, insbesondere von 80% bis 90%, der Profiltiefe (T_{P}) und eine Breite (b_{N}) von 2,0 mm bis 6,0 mm, insbesondere von 3,0 mm bis 5,0 mm, aufweisen.

13. Fahrzeugluftreifen nach einem der Ansprüche 1 bis 12, **dadurch gekennzeichnet, dass** die Nuten (5), in Draufsicht betrachtet und bezogen auf ihre Nutmittellinien (m_{N}), zur Umfangsrichtung unter einem Winkel (γ) von 15° bis 55°, insbesondere von 25° bis 45°, verlaufen.

## Claims

1. Pneumatic vehicle tyre, comprising a directional tread with diagonal grooves (4), which run in a V-shaped manner relative to one another over the tread width and which open into one another, wherein in each tread half there run between circumferentially adjacent diagonal grooves (4) at least two channels (5), which in plan view are inclined in opposite directions relative to the diagonal grooves (4) and each of which comprises two channel flanks (5a, 5b) and a channel base (5c), wherein the diagonal grooves (4) and the channels (5) delimit shoulder-side profile blocks (2), which belong to two shoulder-side rows of profile blocks (1), and central profile blocks (3), which are located in a central tread region (Z), wherein channels (5) which are inclined in opposite directions relative to the diagonal grooves (4) and each of which has a number of projections (6) on their channel flanks (5a, 5b) are provided, wherein - when viewed over the extent of the corresponding channel (5) - a projection (6) located on one channel flank (5a) follows a projection (6) located on the other channel flank (5b) in an alternating manner, and a channel base path (5d) running along the projections (6) remains on the channel base (5c), **characterized**
**in that** the projections (6) each have the shape of a pyramid with precisely two triangular delimiting areas (6a) and a radially outer tip (S) lying on the channel flank (5a, 5b), wherein on each channel flank (5a, 5b) at least three mutually adjoining projections (6) are formed, giving the channel base path (5d) a zigzagging course in plan view.

2. Pneumatic vehicle tyre according to Claim 1, **characterized in that** each projection (6) has a plane of symmetry (E₁), which in plan view runs perpendicularly to the channel centreline (m_{N}) of the channel (5), is aligned in the radial direction and in which the two triangular delimiting areas (6a) have a common delimiting edge (9) which is inclined in relation to the radial direction and, when considered in plan view, ends either on or before the channel centreline (m_{N}).

3. Pneumatic vehicle tyre according to Claim 2, **characterized in that** the common delimiting edge (9) of the two triangular delimiting areas (6a), when considered in plan view, ends before the channel centreline (m_{N}) at a distance (a₁), determined perpendicularly to this line, of at least 0.1 mm.

4. Pneumatic vehicle tyre according to Claim 2 or 3, **characterized in that** the common delimiting edge (9) of the two triangular delimiting areas (6a) runs in relation to the radial direction at an angle (λ) of 15° to 35°, in particular of 20° to 30°.

5. Pneumatic vehicle tyre according to one of Claims 1 to 4, **characterized in that** the triangular delimiting areas (6a) each have a radially inner delimiting edge (7), which runs at a constant depth, determined in the radial direction, and runs in relation to the channel centreline (m_{N}) of the channel (5) at an angle (ε) of 25° to 50°, in particular of 30° to 45°.

6. Pneumatic vehicle tyre according to Claim 5, **characterized in that** the channel base path (5d) has a width (b_{P}), determined perdendicularly between the radially inner delimiting edges (7), of 30% to 50%, in particular of 35% to 45%, of the width (b_{N}) of the channel (5), determined at the tread periphery.

7. Pneumatic vehicle tyre according to one of Claims 1 to 6, **characterized in that** the triangular delimiting areas (6a) have a delimiting edge (8), running on the channel flank (5a, 5b), which is inclined in relation to the radial direction at an angle (θ) of 15° to 35°, in particular of 20° to 30°.

8. Pneumatic vehicle tyre according to one of Claims 1 to 7, **characterized in that** the radially outer tip (S) of each projection (6) is located at a height (hv), determined with respect to the lowest point of the channel (5) in the radial direction, of 20% to 60%, in particular of 30% to 50%, preferably of 35% to 45%, of the maximum depth (t_{N}) of the channel (5), determined in the radial direction.

9. Pneumatic vehicle tyre according to one of Claims 1 to 8, **characterized in that** the channels (5) which have the mutually adjoining projections (6) on their channel flanks (5a, 5b) have at least four mutually adjoining projections (6) on each channel flank (5a, 5b).

10. Pneumatic vehicle tyre according to one of Claims 1 to 9, **characterized in that** the channels (5) which have the mutually adjoining projections (6) on their channel flanks (5a, 5b) have at least four, in particular exactly four, projections (6) on one channel flank (5a) and at least five, in particular exactly five, projections (6) on the other channel flank (5b).

11. Pneumatic vehicle tyre according to one of Claims 1 to 10, **characterized in that** in each tread half there run between circumferentially adjacent diagonal grooves (4) three channels (5) that are inclined in relation to the diagonal grooves (4), wherein the projections (6) are formed at least, in particular exclusively, in the two channels (5) respectively running further to the outside of the tread.

12. Pneumatic vehicle tyre according to one of Claims 1 to 11, **characterized in that** the channels (5) have in the radial direction a depth (t_{N}) of 75% to 100%, in particular of 80% to 90%, of the profile depth (T_{P}) and a width (b_{N}) of 2.0 mm to 6.0 mm, in particular 3.0 mm to 5.0 mm.

13. Pneumatic vehicle tyre according to one of Claims 1 to 12, **characterized in that** the channels (5), when considered in plan view and with respect to their channel centrelines (m_{N}), run in relation to the circumferential direction at an angle (γ) of 15° to 55°, in particular of 25° to 45°.

## Revendications

1. Pneumatique de véhicule avec une bande de roulement directionnelle avec des sillons obliques (4) s'étendant en forme de V les uns par rapport aux autres sur la largeur de la bande de roulement, débouchant les uns dans les autres, dans chaque moitié de la bande de roulement, entre des sillons obliques (4) voisins dans la direction circonférentielle, s'étendant au moins deux rainures (5) inclinées en sens inverse par rapport aux sillons obliques (4) en vue de dessus avec respectivement deux flancs de rainure (5a, 5b) et un fond de rainure (5c), les sillons obliques (4) et les rainures (5) délimitant des blocs profilés (2) côté épaulement appartenant à deux rangées de blocs profilés (1) côté épaulement et des blocs profilés (3) centraux se trouvant dans une zone de bande de roulement centrale (Z), des rainures (5) inclinées en sens inverse par rapport aux sillons obliques (4) étant prévues, lesquelles présentent sur leurs flancs de rainure (5a, 5b) respectivement un nombre de saillies (6) : vu sur l'étendue de la rainure (5) correspondante, une saillie (6) se trouvant sur un flanc de rainure (5a) suivant alternativement une saillie (6) se trouvant sur l'autre flanc de rainure (5b) et il restant au fond de rainure (5c) un chemin de fond de rainure (5d) longeant les saillies (6),
**caractérisé en ce que**
les saillies (6) présentent chacune la forme d'une pyramide avec exactement deux surfaces de délimitation triangulaires (6a) et une pointe radialement extérieure (S) située sur le flanc de rainure (5a, 5b), au moins trois saillies (6) adjacentes les unes aux autres étant réalisées sur chaque flanc de rainure (5a, 5b), lesquelles confèrent au chemin de fond de rainure (5d) un tracé en zigzag en vue de dessus.

2. Pneumatique de véhicule selon la revendication 1, **caractérisé en ce que** chaque saillie (6) présente un plan de symétrie (E₁) orienté dans la direction radiale, s'étendant en vue de dessus perpendiculairement à la ligne médiane de rainure (m_{N}) de la rainure (5), dans lequel les deux surfaces de délimitation triangulaires (6a) présentent un bord de délimitation commun (9) incliné par rapport à la direction radiale, qui, considéré en vue de dessus, se termine soit sur la ligne médiane de rainure (m_{N}), soit avant celle-ci.

3. Pneumatique de véhicule selon la revendication 2, **caractérisé en ce que** le bord de délimitation commun (9) des deux surfaces de délimitation triangulaires (6a), considéré en vue de dessus, se termine avant la ligne médiane de rainure (m_{N}) à une distance (a₁) déterminée perpendiculairement à celle-ci d'au moins 0,1 mm.

4. Pneumatique de véhicule selon la revendication 2 ou 3, **caractérisé en ce que** le bord de délimitation commun (9) des deux surfaces de délimitation triangulaires (6a) s'étend par rapport à la direction radiale selon un angle (λ) de 15° à 35°, notamment de 20° à 30°.

5. Pneumatique de véhicule selon l'une quelconque des revendications 1 à 4, **caractérisé en ce que** les surfaces de délimitation triangulaires (6a) présentent chacune un bord de délimitation radialement intérieur (7) s'étendant à une profondeur constante déterminée dans la direction radiale, qui s'étend selon un angle (ε) de 25° à 50°, notamment de 30° à 45°, par rapport à la ligne médiane de rainure (m_{N}) de la rainure (5).

6. Pneumatique de véhicule selon la revendication 5, **caractérisé en ce que** le chemin de fond de rainure (5d) présente une largeur (b_{P}) déterminée perpendiculairement entre les bords de délimitation radialement intérieurs (7) de 30 % à 50 %, notamment de 35 % à 45 %, de la largeur (b_{N}) de la rainure (5) déterminée à la périphérie de la bande de roulement.

7. Pneumatique de véhicule selon l'une quelconque des revendications 1 à 6, **caractérisé en ce que** les surfaces de délimitation triangulaires (6a) présentent chacune un bord de délimitation (8) s'étendant sur le flanc de rainure (5a, 5b), qui est incliné par rapport à la direction radiale selon un angle (θ) de 15° à 35°, notamment de 20° à 30°.

8. Pneumatique de véhicule selon l'une quelconque des revendications 1 à 7, **caractérisé en ce que** la pointe radialement extérieure (S) de chaque saillie (6) se trouve à une hauteur (hv), déterminée par rapport au point le plus bas de la rainure (5) dans la direction radiale, de 20 % à 60 %, notamment de 30 % à 50 %, de préférence de 35 % à 45 %, de la profondeur maximale (t_{N}) de la rainure (5) déterminée dans la direction radiale.

9. Pneumatique de véhicule selon l'une quelconque des revendications 1 à 8, **caractérisé en ce que** les rainures (5) qui présentent sur leurs flancs de rainure (5a, 5b) les saillies (6) adjacentes les unes aux autres présentent sur chaque flanc de rainure (5a, 5b) au moins quatre saillies (6) adjacentes les unes aux autres.

10. Pneumatique de véhicule selon l'une quelconque des revendications 1 à 9, **caractérisé en ce que** les rainures (5) qui présentent sur leurs flancs de rainure (5a, 5b) les saillies (6) adjacentes les unes aux autres, présentent sur l'un des flancs de rainure (5a) au moins quatre saillies (6), notamment exactement quatre, et sur l'autre flanc de rainure (5b) au moins cinq saillies (6), notamment exactement cinq.

11. Pneumatique de véhicule selon l'une quelconque des revendications 1 à 10, **caractérisé en ce que** trois rainures (5) inclinées par rapport aux sillons obliques (4) s'étendent dans chaque moitié de bande de roulement entre des sillons obliques (4) voisins dans la direction circonférentielle, les saillies (6) étant réalisées au moins, notamment exclusivement, dans les deux rainures (5) s'étendant respectivement plus loin sur le côté extérieur de la bande de roulement.

12. Pneumatique de véhicule selon l'une quelconque des revendications 1 à 11, **caractérisé en ce que** les rainures (5) présentent, dans la direction radiale, une profondeur (t_{N}) de 75 % à 100 %, notamment de 80 % à 90 %, de la profondeur de profilé (T_{P}) et une largeur (b_{N}) de 2,0 mm à 6,0 mm, notamment de 3,0 mm à 5,0 mm.

13. Pneumatique de véhicule selon l'une quelconque des revendications 1 à 12, **caractérisé en ce que** les rainures (5), considérées en vue de dessus et par rapport à leurs lignes médianes de rainures (m_{N}), s'étendent par rapport à la direction circonférentielle selon un angle (γ) de 15° à 55°, notamment de 25° à 45°.
